# EUROPEAN PATENT APPLICATION

(11) **EP 4 510 316 A1**
(43) Date of publication of application: **19.02.2025**
(21) Application number: 23879013.3
(22) Date of filing: 12.10.2023
(51) Int. Cl.: H01M 50/103, H01M 50/15

(54) **HOUSING, BATTERY CELL, BATTERY AND ELECTRIC DEVICE**

(30) Priority: 17.10.2022 CN 202222730292 U
(71) Applicant: Contemporary Amperex Technology Co., Limited, Ningde, Fujian 352100 (CN)
(72) Inventor: WANG, Liqin, Ningde, Fujian 352100 (CN); LI, Quankun, Ningde, Fujian 352100 (CN)
(74) Representative: Herrmann, Uwe
(86) International application number: PCT/CN2023/124168
(87) International publication number: WO 2024/083022

(57) **Abstract**

Some embodiments of this application provide a shell, a battery cell, a battery, and an electrical device, and relate to the technical field of batteries. The shell includes a frame and two end caps. The frame includes two openings opposite to each other along a first direction. The two end caps are connected to two ends of the frame respectively along the first direction, and seal the two openings respectively. The two end caps and the frame together define an accommodation space configured to accommodate an electrode assembly. The two openings created on the frame make it convenient to put the electrode assembly into the shell, thereby reducing the risk that the electrode assembly is damaged by excessive friction between the electrode assembly and an inner side of the frame during encasing of the electrode assembly, and improving the yield rate of encasing of the electrode assembly.

## Description

### +CROSS-REFERENCE TO RELATED APPLICATIONS

This application claims priority to Chinese Patent Application No. 202222730292.7, filed on October 17, 2022 and entitled "SHELL, BATTERY CELL, BATTERY, AND ELECTRICAL DEVICE", which is incorporated herein by reference in its entirety.

### TECHNICAL FIELD

This application relates to the technical field of batteries, and in particular, to a shell, a battery cell, a battery, and an electrical device.

### BACKGROUND

With the development of new energy technology, batteries have been widely used in electrical devices such as electric power carts, electric vehicles, electric aircraft, and electric ships.

In a production process of battery cells, an encasing step is involved. The encasing is to assemble an electrode assembly into a shell. The existing shell makes it inconvenient to assemble the electrode assembly into the shell, thereby reducing the yield rate of encasing of the electrode assembly. Therefore, how to improve the yield rate of encasing of the electrode assembly is a pressing technical challenge in the production technology of batteries.

### SUMMARY

An objective of this application is to provide a shell, a battery cell, a battery, and an electrical device. The shell can improve the yield rate of encasing of the electrode assembly.

According to a first aspect, an embodiment of this application provides a shell. The shell includes a frame and two end caps. The frame includes two openings opposite to each other along a first direction. The two end caps are connected to two ends of the frame respectively along the first direction, and seal the two openings respectively. The two end caps and the frame together define an accommodation space configured to accommodate an electrode assembly.

In the above technical solution, two openings are created on the frame, thereby increasing the degree of openness of the frame. On the one hand, this increases the operating space in a process of putting the electrode assembly into the frame, makes it more convenient for the electrode assembly to enter the shell, and improves the yield rate of encasing of the electrode assembly. On the other hand, when the electrode assembly is fitted into the frame from one opening, the encasing status of the electrode assembly can be clearly observed through the other opening, and the position of the electrode assembly can be adjusted, thereby reducing the risk that the electrode assembly is damaged by excessive friction between the electrode assembly and the inner side of the frame during encasing of the electrode assembly, and improving the yield rate of encasing of the electrode assembly.

In some embodiments, the frame includes a plurality of sidewalls connected sequentially in tandem. The plurality of sidewalls close in to form the two openings. An area of each of the openings is larger than an area of an outer surface of each of the sidewalls.

In the above technical solution, the area of the opening is larger than the area of the outer surface of each sidewall, the opening is formed on a sidewall with the largest surface area on the shell, thereby making it convenient to put the electrode assembly into the shell.

In some embodiments, the plurality of sidewalls include a first sidewall, a second sidewall, a third sidewall, and a fourth sidewall connected sequentially in tandem. Along a second direction, the first sidewall is disposed opposite to the third sidewall. Along a third direction, the second sidewall is disposed opposite to the fourth sidewall. The first direction, the second direction, and the third direction are perpendicular to each other.

In the above technical solution, the first sidewall, the second sidewall, the third sidewall, and the fourth sidewall form a rectangular frame. On the one hand, the rectangular frame makes it convenient to stack a plurality of battery cells to form a battery pack, and improves space utilization. On the other hand, the rectangular frame is simple in structure and facilitates processing and manufacturing.

In some embodiments, along the first direction, a first edge portion disposed around the opening is disposed at least at one end of the frame. The first edge portion is configured to be connected to the end cap.

In the above technical solution, the first edge portion increases the contact area between the frame and the end cap, thereby increasing the strength of connection between the frame and the end cap.

In some embodiments, along the first direction, the first edge portion is disposed at both ends of the frame. The two end caps are connected to the two first edge portions respectively.

In the above technical solution, the two first edge portions increase the strength of connecting the two end caps to the frame respectively.

In some embodiments, the first edge portion protrudes beyond an outer side of the frame; or, the first edge portion protrudes beyond an inner side of the frame.

In the above technical solution, when the first edge portion protrudes beyond the outer side of the frame, the junction between the end cap and the frame is located outside the frame, so that less space is occupied inside the frame. In this way, a larger electrode assembly can be accommodated inside the frame, thereby increasing the energy density of the battery cell. When the first edge portion protrudes beyond the inner side of the frame, the contour of the shell formed by the frame and the two end caps is regular, thereby making it convenient to stack a plurality of battery cells

In some embodiments, along the first direction, a protruding portion is disposed on a surface, oriented toward the frame, of the end cap. The protruding portion is at least partially located in the frame and fits the frame in position.

In the above technical solution, the protruding portion increases the structural strength of the end cap on the one hand, and plays a role in positioning the end cap on the other hand, thereby making it convenient for the end cap to cap off the opening of the frame.

In some embodiments, a second edge portion is disposed on at least one of the end caps. The second edge portion is disposed around an edge of the end cap. The second edge portion protrudes beyond a surface, oriented toward the frame, of the end cap along the first direction. The second edge portion is configured to be connected to the frame.

In the above technical solution, on the one hand, the second edge portion increases the connection area between the frame and the end cap, and in turn, increases the strength of connection between the frame and the end cap. On the other hand, the second edge portion plays a role in positioning the end cap, and makes it convenient for the end cap to cap off the opening of the frame.

In some embodiments, the second edge portion is disposed on both of the end caps.

In the above technical solution, the second edge portion is disposed on both end caps, thereby increasing the structural strength of the shell formed by the two end caps and the frame.

In some embodiments, the second edge portion is connected to an outer side of the frame; or, the second edge portion is connected to an inner side of the frame.

In the above technical solution, when the second edge portion is connected to the outer side of the frame, less space is occupied inside the frame. In this way, a larger electrode assembly can be accommodated inside the frame, thereby increasing the energy density of the battery cell. When the second edge portion is connected to the inner side of the frame, the contour of the shell formed by the frame and the two end caps is regular, thereby making it convenient to stack a plurality of battery cells.

In some embodiments, the frame includes an inner side, an outer side, and two end faces. The inner side is disposed opposite to the outer side. The two end faces are disposed opposite to each other along the first direction. The two end caps are connected to the two end faces respectively. The end faces are connected to the inner side and the outer side. A distance between the inner side and the outer side is L₁. The end cap includes a connecting portion along the first direction, and the connecting portion overlaps the end face. A thickness of the connecting portion is L₂, satisfying: L₁ > L₂.

In the above technical solution, when L₁ is greater than L₂, on the one hand, the thickness of the frame increases the structural strength of the shell. On the other hand, this increases the contact area of the junction between the end cap and the frame, and increases the strength of connection between the frame and the end cap.

In some embodiments, a thickness of the end cap is D₁, a thickness of the frame is D₂, satisfying: 50 µm ≤ D₁ ≤ 200 µm; and/or 50 µm ≤ D₂ ≤ 200 µm.

In the above technical solution, when the thickness D₁ of the end cap satisfies 50 µm ≤ D₁ ≤ 200 µm, the strength of the end cap is increased, and at the same time, the internal volume of the shell formed by the end caps and the frame is increased. When the thickness D₂ of the frame satisfies 50 µm ≤ D₁ ≤ 200 µm, the strength of the frame is increased, and at the same time, the internal volume of the shell formed by the end caps and the frame is increased.

In some embodiments, the frame and/or the end cap includes stainless steel.

In the above technical solution, steel exhibits good physical stability and a good compressive resistance. When the frame and/or the end caps are made of steel, the structural strength of the shell is increased.

In some embodiments, the end cap is welded to the frame.

In the above technical solution, the end caps are connected to the frame by welding, thereby achieving the following advantages: on the one hand, the connection strength is high; and, on the other hand, after welding, the contour of the junction between the end cap and the frame is regular without forming a relatively large bulge, thereby making the contour of the shell regular.

According to a second aspect, an embodiment of this application provides a battery cell. The battery cell includes the shell disclosed in the above embodiment and an electrode assembly. The electrode assembly is accommodated in the shell.

In some embodiments, the frame includes a wall portion. A lead-out hole is created on the wall portion. The lead-out hole penetrates the wall portion along a thickness direction of the wall portion. The battery cell further includes an electrode terminal, and the electrode terminal is electrically connected to the electrode assembly. The electrode terminal includes a terminal body, a first constraining portion, and a second constraining portion. The terminal body is inserted into the lead-out hole. Along the thickness direction of the wall portion, the first constraining portion and the second constraining portion are connected to two ends of the terminal body respectively. The first constraining portion and the second constraining portion are located on two sides of the wall portion respectively to fix the terminal body.

In the above technical solution, the terminal body is configured to lead the electrical energy of the electrode assembly out of the shell. The terminal body is fixed to the wall portion under the action of the first constraining portion and the second constraining portion. The terminal body does not need to be welded to the wall portion, thereby reducing the risk of weld perforation of the frame and damage to the structure of the frame during welding.

In some embodiments, the battery cell further includes a current collecting component. The current collecting component connects the electrode terminal to the electrode assembly. A second lead-out hole is created on the current collecting component. The terminal body is inserted into the second lead-out hole. Along the thickness direction of the wall portion, the first constraining portion is located in the shell, and the current collecting component is at least partially located between the first constraining portion and the wall portion.

In the above technical solution, the current collecting component is configured to electrically connect the electrode terminal and the electrode assembly. The current collecting component is sandwiched between the first constraining portion and the wall portion to fix the current collecting component to the electrode terminal, thereby streamlining the assembling process and improving the production efficiency.

According to a third aspect, an embodiment of this application provides a battery. The battery includes the battery cell disclosed in the above embodiment.

According to a fourth aspect, an embodiment of this application provides an electrical device. The electrical device includes the battery disclosed in the above embodiment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to some embodiments of this application;
FIG. 2 is an exploded view of a battery according to some embodiments of this application;
FIG. 3 is a schematic structural diagram of a shell according to some embodiments of this application;
FIG. 4 is an exploded view of a shell according to some embodiments of this application;
FIG. 5 is a schematic structural diagram of a frame according to some embodiments of this application;
FIG. 6 is an exploded view of a shell on which a first edge portion is disposed according to some embodiments of this application;
FIG. 7 is a schematic diagram of a first edge portion disposed according to some embodiments of this application;
FIG. 8 is a close-up view of a part A shown in FIG. 7;
FIG. 9 is a schematic diagram of a first edge portion disposed according to some other embodiments of this application;
FIG. 10 is a close-up view of a part B shown in FIG. 9;
FIG. 11 is a schematic diagram of a protruding portion disposed according to some embodiments of this application;
FIG. 12 is a close-up view of a part C shown in FIG. 11;
FIG. 13 is an exploded view of a shell on which a second edge portion is disposed according to some embodiments of this application;
FIG. 14 is a close-up view of a part D shown in FIG. 13;
FIG. 15 is a schematic diagram of a fit between end caps and a frame according to some embodiments of this application;
FIG. 16 is a close-up view of a part E shown in FIG. 15;
FIG. 17 is a schematic structural diagram of a thickened frame according to some embodiments of this application;
FIG. 18 is a close-up view of a part F shown in FIG. 17;
FIG. 19 is a schematic diagram of a fit between a frame and end caps according to some embodiments of this application;
FIG. 20 is a close-up view of a part G shown in FIG. 19; and
FIG. 21 is a schematic structural diagram of an electrode terminal according to some embodiments of this application.

List of reference numerals:
10-box; 11-first part; 12-second part; 20-battery cell; 21-shell; 211-end cap; 2111-second edge portion; 2112-protruding portion; 212-frame; 2121-first sidewall; 2122-second sidewall; 2123-third sidewall; 2124-fourth sidewall; 2125-first edge portion; 22-current collecting component; 23-first insulator; 24-second insulator; 25-electrode terminal; 251-second constraining portion; 252-terminal body; 253-first constraining portion; 26-electrode assembly; 100-battery; 200-controller; 300-motor; 1000-vehicle.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more. Similarly, "a plurality of groups" means two or more groups, and "a plurality of pieces" means two or more pieces.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

A typical battery cell includes a housing, an electrode assembly, an end cap assembly, and other components. The housing includes an opening. During assembling of the battery cell, the electrode assembly is put into the housing through the opening. The electrode assembly is accommodated in the housing. The end cap caps off the opening of the housing to isolate the internal environment of the battery cell from the external environment.

The opening is conventionally created on just one of the sidewalls of the housing. Therefore, during encasing of the electrode assembly, on the one hand, it is not convenient to put the electrode assembly into the housing due to the small size of the opening. On the other hand, with just one opening created on the housing, it is not convenient to check whether the electrode assembly is aligned with the opening during the encasing. If the electrode assembly is not aligned with the opening, the electrode assembly rubs against the inner wall of the housing during the encasing, thereby being prone to scratch the outermost separator of the electrode assembly, and posing short-circuit hazards to the battery cell.

In view of this, a shell is hereby designed. The shell includes a frame and two end caps. The frame includes two openings opposite to each other along a first direction. The two end caps are connected to two ends of the frame respectively along the first direction, and seal the two openings respectively. The two end caps and the frame together define an accommodation space configured to accommodate an electrode assembly.

Two openings are created on the frame, thereby increasing the degree of openness of the frame. This increases the operating space during encasing of the electrode assembly, makes it more convenient for the electrode assembly to enter the shell, and improves the yield rate of encasing of the electrode assembly.

An embodiment of this application provides an electrical device powered by a battery. The electrical device may be, but is not limited to, an electric power cart, electric vehicle, ship, spacecraft, or the like. For example, the types of the spacecraft may include an airplane, rocket, space shuttle, spaceship, and the like.

For ease of description in the following embodiments, a vehicle is used as an example of the electrical device disclosed in an embodiment of this application.

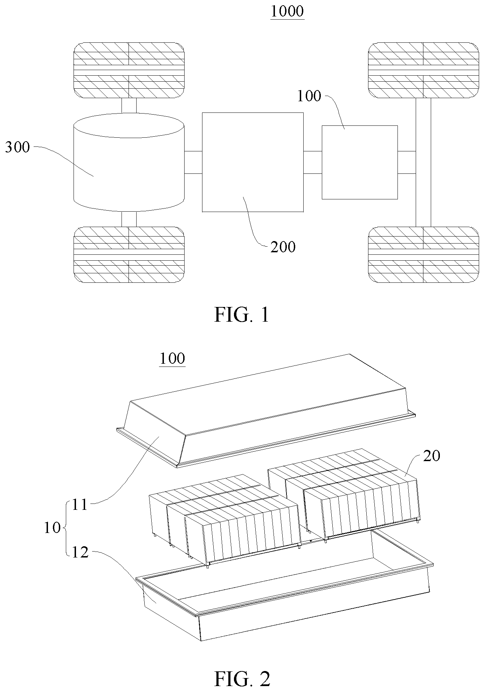

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery.

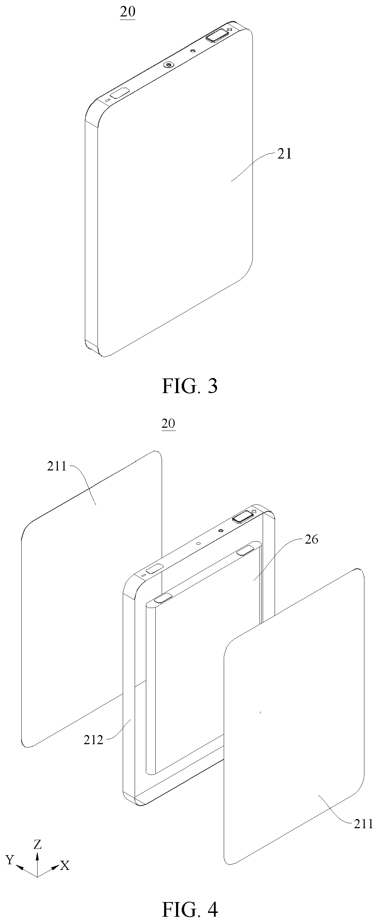

According to some embodiments of this application, referring to FIG. 3 and FIG. 4, FIG. 3 is a schematic structural diagram of a shell 21 according to some embodiments of this application; and FIG. 4 is an exploded view of a shell 21 according to some embodiments of this application. An embodiment of this application provides a shell 21. The shell includes a frame 212 and two end caps 211. The frame 212 includes two openings opposite to each other along a first direction. Along the first direction, the two end caps 211 are connected to two ends of the frame 212 respectively, and seal the two openings respectively. The two end caps 211 and the frame 212 together define an accommodation space configured to accommodate an electrode assembly 26.

The shell 21 in this embodiment of this application may be configured to accommodate the electrode assembly 26 of the battery cell 20.

The first direction may be a direction indicated by the Y-axis in the drawing.

The frame 212 may be a structure formed by hollowing out a sheet material, or may be formed by connecting a plurality of sidewalls by welding, bonding or other means. The shape of the frame 212 may be a rectangle, a circle, a triangle, or another polygonal structure.

The end cap 211 is configured to seal the opening of the frame 212 so that the two end caps 211 and the frame 212 form a cavity. The end cap 211 may be a flat plate structure. The end cap 211 and the frame 212 may be made of the same material or different materials.

The opening is a passage through which the electrode assembly 26 is put into the shell 21. During use, the electrode assembly 26 may be fitted into the frame 212 first, and then two end caps 211 cap off the two openings of the frame 212 respectively to seal the electrode assembly 26 in the frame 212.

The yield rate of encasing means a ratio of the number of battery cells 20 in which the electrode assembly 26 is not damaged to the total number of all battery cells 20 after the electrode assembly 26 is fitted into the frame 212. The yield rate of encasing reflects the production quality of the battery cells 20 in the process of assembling the electrode assembly 26. The higher the yield rate of encasing, the higher the production quality.

Two openings are created on the frame 212, thereby increasing the degree of openness of the frame 212. On the one hand, this increases the operating space in a process of putting the electrode assembly 26 into the frame 212, makes it more convenient to encase the electrode assembly 26, and improves the yield rate of encasing of the electrode assembly 26.

On the other hand, when the electrode assembly is fitted into the frame 212 from one opening, the encasing status of the electrode assembly 26 can be clearly observed through the other opening, and the position of the electrode assembly 26 can be adjusted, thereby reducing the risk that the outermost separator of the electrode assembly 26 is frayed and damaged by excessive friction between the electrode assembly and the inner side of the frame 212 during encasing of the electrode assembly 26, and improving the yield rate of encasing of the electrode assembly 26.

Further, after the electrode assembly 26 is fitted into the frame 212, the production personnel can observe the position of the electrode assembly 26 in the frame 212 and can adjust the position of the electrode assembly 26, thereby making it convenient for other components such as the current collecting component 22 and the electrode terminal 25 of the battery cell 20 to fit the electrode assembly 26, and improving the assembling quality of the battery cell 20.

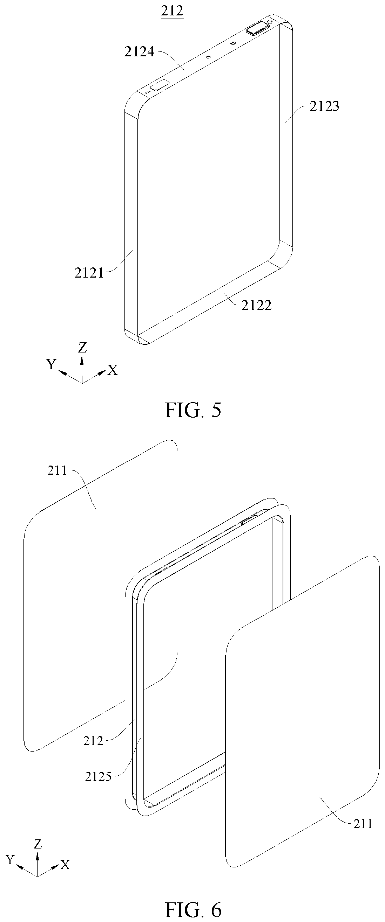

According to some embodiments of this application, referring to FIG. 5, FIG. 5 is a schematic structural diagram of a frame 212 according to some embodiments of this application. The frame 212 includes a plurality of sidewalls connected sequentially in tandem. The plurality of sidewalls close in to form the two openings. An area of each of the openings is larger than an area of an outer surface of each of the sidewalls.

When the plurality of sidewalls are connected sequentially in tandem, two ends, opposite to each other along the first direction, of the sidewalls close in to form two openings.

The number of sidewalls may be three, four or five, and correspondingly, the frame 212 is in the shape of a triangle, a rectangle, or a pentagon.

The plurality of sidewalls may be independent of each other. The plurality of sidewalls are connected by welding or bonding to form the frame 212. Alternatively, the plurality of sidewalls may be formed in one piece. That is, the plurality of sidewalls are formed from a whole plate. For example, when the frame 212 is rectangular, the frame 212 may be formed by bending one plate for three times so that the plate forms four parts. The four parts of the bent plate are connected in tandem.

When the plurality of sidewalls are formed in one piece, a fillet may be formed between the sidewalls in a process of bending the plate, so as to reduce the risk of fracturing the plate when the plate is being bent.

The area of the opening is an area of a projection of the opening on a reference plane perpendicular to the first direction. When the area of the opening is larger than the area of the outer surface of each sidewall, the opening is formed on a sidewall with the largest surface area on the shell 21, thereby making it convenient to put the electrode assembly 26 into the shell 21. In addition, in putting the electrode assembly 26 into the housing, the movement stroke length of the electrode assembly 26 relative to the inner wall of the frame 212 is reduced, and the damage of the electrode assembly 26 caused by friction is reduced. For example, if the frame 212 is a rectangular structure, the accommodation space formed by the shell 21 is cuboidal, and the electrode assembly 26 may also be cuboidal. It is assumed that the length of the accommodation space is greater than the width and greater than the height of the accommodation space, and the length of the electrode assembly 26 is also greater than the width and greater than the height of the electrode assembly. In this case, in putting the electrode assembly 26 into the housing, the largest-area surface of the electrode assembly 26 may be oriented toward the opening during loading of the electrode assembly into the frame 212, so that the sliding stroke length of the electrode assembly 26 relative to the inner wall of the frame 212 is the shortest in contrast to a technical solution in which another surface is oriented toward the opening during loading of the electrode assembly into the frame 212.

According to some other embodiments of this application, the frame 212 may include one sidewall. For example, when the frame 212 is a circular structure, the frame may be formed by curving one plate into a circle and then connecting one end to the other end of the curved plate.

According to some embodiments of this application, referring to FIG. 5, the plurality of sidewalls include a first sidewall 2121, a second sidewall 2122, a third sidewall 2123, and a fourth sidewall 2124 connected sequentially in tandem. Along a second direction, the first sidewall 2121 is disposed opposite to the third sidewall 2123. Along a third direction, the second sidewall 2122 is disposed opposite to the fourth sidewall 2124. The first direction, the second direction, and the third direction are perpendicular to each other.

When the first direction is a direction indicated by the Y-axis in the drawing, the second direction may be a direction indicated by the X-axis in the drawing, and the third direction may be a direction indicated by the Z-axis in the drawing.

When the first sidewall 2121 is disposed opposite to the third sidewall 2123 and the second sidewall 2122 is disposed opposite to the fourth sidewall 2124, the first sidewall 2121, the second sidewall 2122, the third sidewall 2123, and the fourth sidewall 2124 form a rectangular structure.

On the one hand, the rectangular frame 212 makes it convenient to stack a plurality of battery cells 20 to form a battery 100 pack, and improves space utilization. On the other hand, the rectangular frame 212 is simple in structure and facilitates processing and manufacturing.

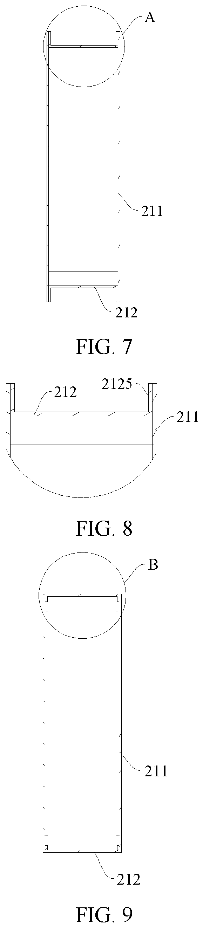

According to some embodiments of this application, referring to FIG. 6 to FIG. 8, FIG. 6 is an exploded view of a shell 21 on which a first edge portion 2125 is disposed according to some embodiments of this application; FIG. 7 is a schematic diagram of a first edge portion 2125 disposed according to some embodiments of this application; and FIG. 8 is a close-up view of a part A shown in FIG. 7. Along the first direction, a first edge portion 2125 disposed around the opening is disposed at least at one end of the frame 212. The first edge portion 2125 is configured to be connected to the end cap 211.

The first edge portion 2125 allows the sidewall of the frame 212 to include an out-extending part, so as to increase the contact area between the frame 212 and the end cap 211. The first edge portion 2125 may be a flange connected to the sidewall of the frame 212 to form an opening, or may be a structure protruding beyond the sidewall of the frame 212 and formed by bending a part of the sidewall of the frame 212.

The first edge portion 2125 may be bonded or welded to the end cap 211.

The first edge portion 2125 may be continuously arranged around the opening, or a plurality of first edge portions 2125 may be arranged along the edge of the opening.

The first edge portion 2125 may be disposed at one end of the frame 212, or the first edge portion 2125 may be disposed at both ends of the frame.

The first edge portion 2125 increases the contact area between the frame 212 and the end cap 211, thereby increasing the strength of connection between the frame 212 and the end cap 211.

According to some embodiments of this application, referring to FIG. 6, along the first direction, the first edge portion 2125 is disposed at both ends of the frame 212. The two end caps 211 are connected to the two first edge portions 2125 respectively.

The two first edge portions 2125 increase the contact area between the two end caps 211 and the frame 212 respectively, thereby increasing the strength of connection between the two end caps 211 and the frame 212.

According to some embodiments of this application, referring to FIG. 7 and FIG. 8, the first edge portion 2125 protrudes beyond the outer side of the frame 212.

The first edge portion 2125 may extend along a direction parallel to the X-axis and protrude beyond the outer side of the frame 212, so that the first edge portion 2125 is flush with the opening of the frame 212. When the end cap 211 caps off the opening, the end cap 211 can contact the first edge portion 2125.

Alternatively, the first edge portion 2125 may extend along a direction at an angle to the X-axis. Correspondingly, in order for the end cap 211 to fit the first edge portion 2125 when capping off the opening, a part of the edge of the end cap 211 may be bent.

When the first edge portion 2125 protrudes beyond the outer side of the frame 212, the junction between the end cap 211 and the frame 212 is located outside the frame 212, so that less space is occupied inside the frame 212. In this way, a larger electrode assembly 26 can be accommodated inside the frame 212, thereby increasing the energy density of the battery cell 20. In addition, when the frame 212 and the end cap 211 are connected in a connection manner that generates high temperature (such as welding), the electrode assembly 26 is kept away from the heat source, thereby reducing the risk of damage to the electrode assembly 26 caused by the high temperature.

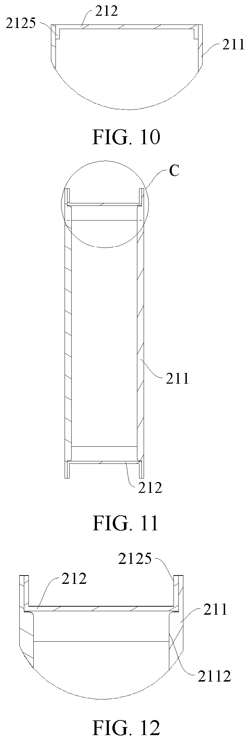

According to some other embodiments of this application, referring to FIG. 9 and FIG. 10, FIG. 9 is a schematic diagram of a first edge portion 2125 disposed according to some other embodiments of this application; and FIG. 10 is a close-up view of a part B shown in FIG. 9. The first edge portion 2125 protrudes beyond the inner side of the frame 212.

The first edge portion 2125 may extend along a direction parallel to the X-axis and protrude beyond the inner side of the frame 212, so that the first edge portion 2125 is flush with the opening of the frame 212.

When the first edge portion 2125 protrudes beyond the inner side of the frame 212, the contact area between the end cap 211 and the frame 212 is increased, and the contour of the shell 21 formed by the frame 212 and the two end caps 211 is regular, thereby making it convenient to stack a plurality of battery cells 20 to form a battery 100 pack.

According to some embodiments of this application, referring to FIG. 11 and FIG. 12, FIG. 11 is a schematic diagram of a protruding portion 2112 disposed according to some embodiments of this application; and FIG. 12 is a close-up view of a part C shown in FIG. 11. Along the first direction, a protruding portion 2112 is disposed on a surface, oriented toward the frame 212, of the end cap 211. The protruding portion 2112 is at least partially located in the frame 212 and fits the frame 212 in position.

The protruding portion 2112 may be a component connected to the surface, oriented toward the frame 212, of the end cap 211. Alternatively, the edge of the surface, oriented toward the frame 212, of the end cap 211 may be thinned to form a protruding portion 2112 in at the center of the end cap 211.

The protruding portion 2112 increases the structural strength of the end cap 211 on the one hand, and plays a role in positioning the end cap 211 on the other hand, thereby making it convenient for the end cap 211 to cap off the opening of the frame 212.

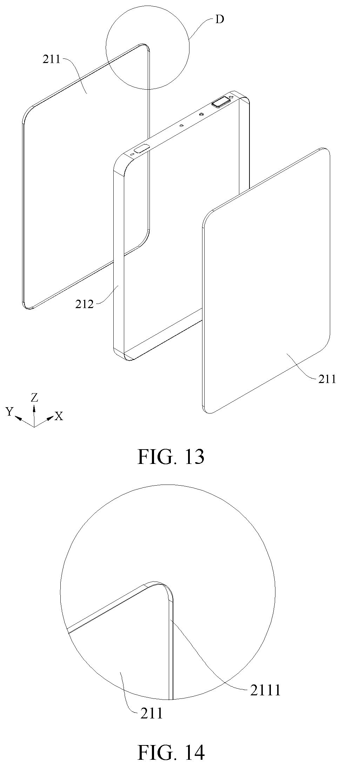

According to some embodiments of this application, referring to FIG. 13 to FIG. 14, FIG. 13 is an exploded view of a shell 21 on which a second edge portion 2111 is disposed according to some embodiments of this application; and FIG. 14 is a close-up view of a part D shown in FIG. 13. The second edge portion 2111 is disposed on at least one of the end caps 211. The second edge portion 2111 is disposed around an edge of the end cap 211. The second edge portion 2111 protrudes beyond a surface, oriented toward the frame 212, of the end cap 211 along the first direction. The second edge portion 2111 is configured to be connected to the frame 212.

The second edge portion 2111 may be a flange connected to the end cap 211, or may be formed by bending the edge of the end cap 211 toward the frame 212.

The second edge portion 2111 may be continuously arranged around the edge of the end cap 211, or a plurality of second edge portions 2111 may be arranged along the edge of the end cap 211.

On the one hand, the second edge portion 2111 increases the connection area between the frame 212 and the end cap 211, and in turn, increases the strength of connection between the frame 212 and the end cap 211. On the other hand, the second edge portion 2111 plays a role in positioning the end cap 211. When the end cap 211 caps off the opening, the interior of the second edge can limit the displacement of the end cap 211 on the XY plane, thereby making it convenient for the end cap 211 to cap off the opening of the frame 212.

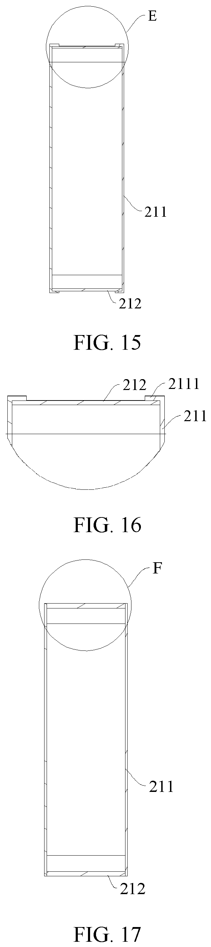

According to some embodiments of this application, referring to FIG. 15 to FIG. 16, FIG. 15 is a schematic diagram of a fit between end caps 211 and a frame 212 according to some embodiments of this application; and FIG. 16 is a close-up view of a part E shown in FIG. 15. A second edge portion 2111 is disposed on both end caps 211.

Disposing the second edge portion 2111 on both end caps 211 increases the structural strength of the shell 21 formed by the two end caps 211 and the frame 212.

According to some embodiments of this application, referring to FIG. 16, the second edge portion 2111 is connected to an outer side of the frame 212.

The second edge portion 2111 may be disposed around the outer side of the frame 212 to enhance the effect of the second edge portion 2111 in constraining the position of the end cap 211. For example, the contour defined by the second edge portion 2111 may be consistent with the contour of the outer side of the frame 212. When the end cap 211 caps off the opening of the frame 212, the inner side of the second edge portion 2111 abuts against the outer side of the frame 212. For another example, at least one second edge portion 2111 may be disposed on each of the two sides of the end cap 211 in the X-axis direction, and at least one second edge portion may be disposed on each of the two sides of the end cap 211 in the Z-axis direction.

When the second edge portion 2111 is connected to the outer side of the frame 212, less space is occupied inside the frame 212. In this way, a larger electrode assembly 26 can be accommodated inside the frame 212, thereby increasing the energy density of the battery cell 20. In addition, the second edge portion 2111 serves a blocking function to prevent high-temperature welding slag generated during welding from entering the shell 21.

According to some other embodiments of this application, the second edge portion 2111 is connected to an inner side of the frame 212.

In this embodiment, when the end cap 211 caps off the opening, the outer sidewall of the second edge portion 2111 can abut against the inner side of the frame 212, so that the end cap 211 can fit the frame 212 tightly.

When the second edge portion 2111 is connected to the inner side of the frame 212, the contour of the shell 21 formed by the frame 212 and the two end caps 211 is regular, thereby making it convenient to stack a plurality of battery cells 20.

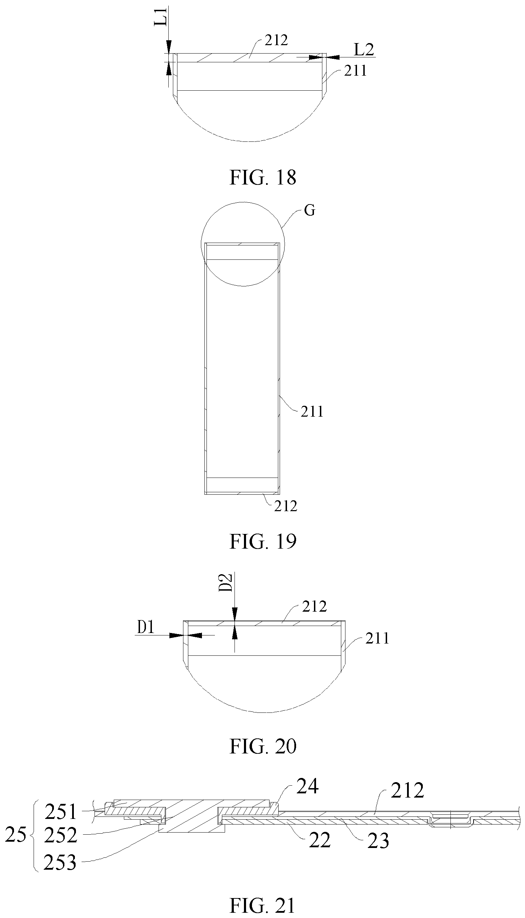

According to some embodiments of this application, referring to FIG. 17 to FIG. 18, FIG. 17 is a schematic structural diagram of a thickened frame 212 according to some embodiments of this application; and FIG. 18 is a close-up view of a part F shown in FIG. 17. The frame 212 includes an inner side, an outer side, and two end faces. The inner side is disposed opposite to the outer side. The two end faces are disposed opposite to each other along the first direction. The two end caps 211 are connected to the two end faces respectively. The end faces are connected to the inner side and the outer side. A distance between the inner side and the outer side is L₁. The end cap 211 includes a connecting portion along the first direction, and the connecting portion overlaps the end face. A thickness of the connecting portion is L₂, satisfying: L₁ > L₂.

The end face forms an opening, and the end cap 211 covers the end face to form a connecting portion, so that the end cap 211 can seal the opening.

The distance L₁ between the inner side and the outer side reflects an allowed overlap area between the end face and the end cap 211. With the size of the frame 212 being constant, the larger the value of L₁, the larger the area of the end face, and in turn, the larger the contact area between the end cap 211 and the end face.

If L₁ ≤ L₂, the contact area between the end cap 211 and the end face is overly small, and the structural strength of the shell 21 is reduced.

When L₁ is greater than L₂, on the one hand, this is equivalent to increasing the thickness of the frame 212, and in turn, increasing the structural strength of the shell 21. On the other hand, this increases the contact area of the junction between the end cap 211 and the frame 212, increases the strength of connection between the frame 212 and the end cap 211, and reduces the risk of a weld perforation defect during the welding between the end cap 211 and the box 212.

According to some embodiments of this application, referring to FIG. 19 to FIG. 20, FIG. 19 is a schematic diagram of a fit between a frame 212 and end caps 211 according to some embodiments of this application; and FIG. 20 is a close-up view of a part G shown in FIG. 19. The thickness of the end cap 211 is D₁, and the thickness of the frame 212 is D₂, satisfying: 50 µm ≤ D₁ ≤ 200 µm; and/or 50 µm ≤ D₂ ≤ 200 µm.

If D₁ or D₂ is greater than 200 µm, the thickness of the shell 21 formed by the end caps 211 and the frame 212 is overly large. In this case, when the size of the shell 21 remains constant, the volume of the accommodation space formed by the shell 21 is small, thereby reducing the energy density of the battery cell 20 and increasing the mass of the battery cell 20.

If D₁ or D₂ is less than 50 µm, the strength of the end cap 211 and the frame 212 is low, and in turn, the strength of the shell 21 is low.

In this embodiment, both D₁ and D₂ are, or, D₁ or D₂ is, greater than or equal to 50 µm and less than or equal to 200 µm .

When the thickness D₁ of the end cap 211 satisfies 50 µm ≤ D₁ ≤ 200 µm, the strength of the end cap 211 is increased, and at the same time, the internal volume of the shell 21 formed by the end caps 211 and the frame 212 is increased. When the thickness D₂ of the frame 212 satisfies 50 µm ≤ D₁ ≤ 200 µm, the strength of the frame 212 is increased, and at the same time, the internal volume of the shell 21 formed by the end caps 211 and the frame 212 is increased.

In some other embodiments of this application, the thickness of the end cap 211 is D₁, the thickness of the frame 212 is D₂, satisfying: 70 µm ≤ D₁ ≤ 150 µm; and/or 70 µm ≤ D₂ ≤ 150 µm.

According to some embodiments of this application, the frame 212 and/or the end cap 211 includes stainless steel.

In this embodiments, both the frame 212 and the end cap 211 include stainless steel, or one of the frame 212 or the end cap 211 includes stainless steel.

Of the frame 212 and the end cap 211, the one that includes stainless steel may be partially made of stainless steel or entirely made of stainless steel. For example, if the frame 212 includes stainless steel, the frame 212 may be entirely made of stainless steel or partially made of stainless steel.

A coating may be applied onto the surface of the stainless steel. For example, an insulation layer may be applied onto the surface of the frame 212 and the end cap 211 to electrically insulate the shell 21 from the electrode assembly 26, thereby improving the reliability of the battery cell 20. Further, a nickel-plated layer may be disposed on the surface of the frame 212 and the end cap 211. The nickel-plated layer improves the wear resistance and corrosion resistance of the shell 21, and in turn, increases the service life of the shell 21.

Stainless steel possesses relatively high strength and fatigue strength. On the one hand, the stainless steel reduces the wall thickness of the shell 21 formed by the frame 212 and the end caps 211, and enables the shell 21 to accommodate a larger electrode assembly 26, thereby increasing the energy density of the battery cell 20. On the other hand, stainless steel is well resistant to corrosion, thereby increasing the service life of the shell 21.

According to some other embodiments of this application, the frame 212 and/or the end caps 211 may be made of an aluminum alloy.

According to some embodiments of this application, the end caps 211 are welded to the frame 212.

When the end caps 211 are welded to the frame 212, the weld is located at a contact point between the first edge portion 2125 and the end cap 211, or at a contact point between the second edge portion 2111 and the end cap 211.

In the above technical solution, the end caps 211 are connected to the frame 212 by welding, thereby achieving the following advantages: on the one hand, the connection strength is high; and, on the other hand, after welding, the contour of the junction between the end cap 211 and the frame 212 is regular without forming a relatively large bulge, thereby making the contour of the shell 21 regular.

According to some embodiments of this application, this application further provides a battery cell 20. The battery cell includes the shell 21 disclosed in the above embodiment and an electrode assembly 26. The electrode assembly 26 is accommodated in the shell 21.

According to some embodiments of this application, referring to FIG. 21, FIG. 21 is a schematic structural diagram of an electrode terminal 25 according to some embodiments of this application. The frame 212 includes a wall portion. A lead-out hole is created on the wall portion. The lead-out hole penetrates the wall portion along a thickness direction of the wall portion. The battery cell 20 further includes an electrode terminal 25. The electrode terminal 25 is electrically connected to the electrode assembly 26. The electrode terminal 25 includes a terminal body 252, a first constraining portion 253, and a second constraining portion 251. The terminal body 252 is inserted into the lead-out hole. Along the thickness direction of the wall portion, the first constraining portion 253 and the second constraining portion are connected to two ends of the terminal body 252 respectively. The first constraining portion 253 and the second constraining portion 251 are located on two sides of the wall portion respectively to fix the terminal body 252.

The wall portion may be a sidewall of the frame 212. Because the frame 212 includes two openings and a large operating space is available, the lead-out hole is located on the wall portion to facilitate connection of the electrode assembly 26 to the electrode terminal 25.

The first constraining portion 253 and the second constraining portion 251 may be formed by riveting the terminal body 252 to the wall portion. To be specific, an acting force is applied to both ends of the terminal body 252 along the axial direction of the terminal body 252, so that the terminal body 252 stretches along the radial direction to form the two ends of the terminal body 252. The wall portion is partially sandwiched between the first constraining portion 253 and the second constraining portion 251, so that the terminal body 252 can be fixed to the wall portion.

Alternatively, the first constraining portion 253 and the second constraining portion 251 may be independent components. For example, a peripheral wall of the terminal body 252 may be provided with threads. The first constraining portion 253 and the second constraining portion 251 may be provided with screw holes. The terminal body 252 fits the screw holes so that the first constraining portion 253 and the second constraining portion 251 can be threadedly connected to the terminal body 252.

The terminal body 252 is configured to lead the electrical energy of the electrode assembly 26 out of the shell 21. The terminal body 252 is fixed to the wall portion under the action of the first constraining portion 253 and the second constraining portion 251. The terminal body 252 does not need to be welded to the wall portion, thereby reducing the risk of weld perforation of the frame 212 and damage to the structure of the frame 212 during welding.

According to some embodiments of this application, referring to FIG. 21, the battery cell 20 further includes a current collecting component 22. The current collecting component 22 connects the electrode terminal 25 to the electrode assembly 26. A second lead-out hole is created on the current collecting component 22. The terminal body 252 is inserted into the second lead-out hole. Along the thickness direction of the wall portion, the first constraining portion 253 is located in the shell 21, and the current collecting component 22 is at least partially located between the first constraining portion 253 and the wall portion.

The current collecting component 22 is configured to electrically connect the electrode terminal 25 to the electrode assembly 26. The current collecting component 22 may be a metallic conductive piece such as a metal wire or a metallic conductive sheet.

The current collecting component 22 is partially disposed between the first constraining portion 253 and the wall portion, so that the first constraining portion 253 implements connection between the current collecting component 22 and the terminal body 252, and moreover, implements electrical connection between the terminal body 252 and the current collecting component 22, thereby avoiding welding of the terminal body 252 to the current collecting component 22, and reducing the risk of weld perforation of the frame 212 and damage to the structure of the frame 212 during welding. In addition, because no welding is required, the assembling process is streamlined, and the production efficiency is improved.

According to some embodiments of this application, referring to FIG. 21, the battery cell 20 further includes a first insulator 23. The first insulator 23 is at least partially located between the current collecting component 22 and the wall portion along the thickness direction of the wall portion, so as to dielectrically isolate the current collecting component 22 from the wall portion.

The first insulator 23 may be a sheet made of plastic or rubber. A third lead-out hole may be created on the first insulator 23. The terminal body 252 is sequentially inserted into the first lead-out hole, the third lead-out hole, and the second lead-out hole sequentially, so that the first insulator 23 can be sandwiched between the wall portion and the current collecting component 22.

By insulating the current collecting component 22 from the wall portion, the first insulator 23 reduces the risk of short-circuiting between the current collecting component and the wall portion, and improves the reliability of the battery cell 20.

According to some embodiments of this application, referring to FIG. 21, the battery cell 20 further includes a second insulator 24. The second insulator 24 is at least partially located between the wall portion and the second constraining portion 251 along the thickness direction of the wall portion. The second constraining portion 251 is located outside the shell 21.

The second insulator 24 may be a sheet made of plastic or rubber. A fourth lead-out hole may be created on the second insulator 24. The terminal body 252 is inserted into the fourth lead-out hole, so that the second insulator 24 can be partially sandwiched between the second constraining portion 251 and the wall portion.

A counterbore may be created on a surface of the second insulator 24, where the surface is oriented toward the second constraining portion 251. The second constraining portion 251 may be at least partially disposed in the counterbore, so that the second insulator 24 can fit the second constraining portion 251 in position.

By insulating the second constraining portion 251 from the wall portion, the second insulator 24 reduces the risk of short-circuiting between the second constraining portion and the wall portion, and improves the reliability of the battery cell 20.

According to some embodiments of this application, this application further provides a battery 100. The battery includes the battery cell 20 disclosed in the above embodiment. The battery 100 may further include a box 10. The battery cell 20 is disposed in the box 10.

According to some embodiments of this application, this application further provides an electrical device. The electrical device includes the battery 100 disclosed in the above embodiment. The battery 100 is configured to provide electrical energy. Alternatively, the electrical device may include the battery cell 20 disclosed in the foregoing embodiment. The battery cell 20 is configured to provide electrical energy.

According to some embodiments of this application, referring to FIG. 3 to FIG. 5, this application further provides a shell 21. The shell includes a frame 212 and two end caps 211. The frame 212 includes two openings opposite to each other along a first direction. Along the first direction, the two end caps 211 are connected to two ends of the frame 212 respectively, and seal the two openings respectively. The two end caps 211 and the frame 212 together define an accommodation space configured to accommodate an electrode assembly 26.

The frame 212 is a rectangular structure. The frame 212 includes a plurality of sidewalls connected sequentially in tandem. The plurality of sidewalls close in to form the two openings. An area of each of the openings is larger than an area of an outer surface of each of the sidewalls.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A shell, **characterized in that** the shell comprises:
a frame, wherein the frame comprises two openings opposite to each other along a first direction;
two end caps, wherein the two end caps are connected to two ends of the frame respectively along the first direction, and seal the two openings respectively, and the two end caps and the frame together define an accommodation space configured to accommodate an electrode assembly.

2. The shell according to claim 1, **characterized in that** the frame comprises a plurality of sidewalls connected sequentially in tandem, the plurality of sidewalls close in to form the two openings, and an area of each of the openings is larger than an area of an outer surface of each of the sidewalls.

3. The shell according to claim 2, **characterized in that** the plurality of sidewalls comprise a first sidewall, a second sidewall, a third sidewall, and a fourth sidewall connected sequentially in tandem;
along a second direction, the first sidewall is disposed opposite to the third sidewall;
along a third direction, the second sidewall is disposed opposite to the fourth sidewall; and
the first direction, the second direction, and the third direction are perpendicular to each other.

4. The shell according to any one of claims 1 to 3, **characterized in that**, along the first direction, a first edge portion disposed around the opening is disposed at least at one end of the frame, and the first edge portion is configured to be connected to the end cap.

5. The shell according to claim 4, wherein, along the first direction, the first edge portion is disposed at both ends of the frame, and the two end caps are connected to the two first edge portions respectively.

6. The shell according to claim 4 or 5, **characterized in that** the first edge portion protrudes beyond an outer side of the frame; or, the first edge portion protrudes beyond an inner side of the frame.

7. The shell according to any one of claims 1 to 6, **characterized in that**, along the first direction, a protruding portion is disposed on a surface, oriented toward the frame, of the end cap, and the protruding portion is at least partially located in the frame and fits the frame in position.

8. The shell according to any one of claims 1 to 7, **characterized in that** a second edge portion is disposed on at least one of the end caps, the second edge portion is disposed around an edge of the end cap, the second edge portion protrudes beyond a surface, oriented toward the frame, of the end cap along the first direction, and the second edge portion is configured to be connected to the frame.

9. The shell according to claim 8, **characterized in that** the second edge portion is disposed on both of the end caps.

10. The shell according to claim 8 or 9, **characterized in that** the second edge portion is connected to an outer side of the frame; or, the second edge portion is connected to an inner side of the frame.

11. The shell according to any one of claims 1 to 10, **characterized in that** the frame comprises an inner side, an outer side, and two end faces; the inner side is disposed opposite to the outer side; the two end faces are disposed opposite to each other along the first direction; the two end caps are connected to the two end faces respectively; and the end faces are connected to the inner side and the outer side; and
a distance between the inner side and the outer side is L₁, the end cap comprises a connecting portion along the first direction, the connecting portion overlaps the end face, and a thickness of the connecting portion is L₂, satisfying: L₁ > L₂.

12. The shell according to any one of claims 1 to 11, **characterized in that** a thickness of the end cap is D₁, a thickness of the frame is D₂, satisfying: 50 µm ≤ D₁ ≤ 200 µm; and/or 50 µm ≤ D₂ ≤ 200 µm.

13. The shell according to any one of claims 1 to 11, **characterized in that** the frame and/or the end cap comprises stainless steel.

14. The shell according to any one of claims 1 to 11, **characterized in that** the end cap is welded to the frame.

15. A battery cell, **characterized in that** the battery cell comprises:
the shell according to any one of claims 1 to 14; and
an electrode assembly, accommodated in the shell.

16. The battery cell according to claim 15, **characterized in that** the frame comprises a wall portion, a lead-out hole is created on the wall portion, and the lead-out hole penetrates the wall portion along a thickness direction of the wall portion; and
the battery cell further comprises an electrode terminal, and the electrode terminal is electrically connected to the electrode assembly; the electrode terminal comprises a terminal body, a first constraining portion, and a second constraining portion; the terminal body is inserted into the lead-out hole; along the thickness direction of the wall portion, the first constraining portion and the second constraining portion are connected to two ends of the terminal body respectively; and the first constraining portion and the second constraining portion are located on two sides of the wall portion respectively to fix the terminal body.

17. The battery cell according to claim 16, **characterized in that** the battery cell further comprises a current collecting component, and the current collecting component connects the electrode terminal to the electrode assembly; and
a second lead-out hole is created on the current collecting component, the terminal body is inserted into the second lead-out hole, and, along the thickness direction of the wall portion, the first constraining portion is located in the shell, and the current collecting component is at least partially located between the first constraining portion and the wall portion.

18. A battery, **characterized in that** the battery comprises the battery cell according to any one of claims 15 to 17.

19. An electrical device, **characterized in that** the electrical device comprises the battery according to claim 18.
